# EUROPEAN PATENT APPLICATION

(11) **EP 3 243 623 A1**
(43) Date of publication of application: **15.11.2017**
(21) Application number: 16380022.0
(22) Date of filing: 13.05.2016
(51) Int. Cl.: B29B 11/14

(54) **TWO-LAYERED PREFORM**

(71) Applicant: Molmasa Aplicaciones Técnicas, S.L., 08110 Montcada i Reixac (Barcelona) (ES)
(72) Inventor: Atance Orden, Angel, 08032 Barcelona (ES); Viron, Alain, 45390 Desmont (FR)
(74) Representative: Juncosa Miro, Jaime

(57) **Abstract**

The invention relates to a two-layered preform (10, 20) obtained by injection molding for producing containers by drawing-blowing, comprising an inner layer (1) made of a thermoplastic material and an outer layer (2) made of a thermoplastic material overmolded on the inner layer, where the inner layer comprises up to 100% of an amorphous material, with or without dye, and the outer layer comprises at least 85% of polyethylene terephthalate (PET).

## Description

The present invention relates to a two-layered preform obtained by injection molding, provided for producing containers by a drawing-blowing method, the preform comprising an inner layer made of a thermoplastic material and an outer layer made of a thermoplastic material overmolded on said inner layer.

The inner layer extends from a closed base of the preform to an upper opening of the preform in a first embodiment, wherein said inner layer of the container produced from the preform will be resistant to various chemical agents, or said inner layer only reaches an area where the neck of the preform starts, for example, for preforms of containers for food products, such as dairy products.

### Background of the Invention

The marketing of preforms with bi-layer technology, i.e., preforms made up of two polyethylene terephthalate (PET) layers intended for bi-orientation by blowing to produce bottles, mainly for containing beverages, started in the year 2008, despite the number of research projects and attempts which have been carried out to use this technology ever since the discovery of PET material. Patent documents US 4413974, GB 2057962 and GB 2138736, describing different solutions for manufacturing such preforms, can be mentioned to that end.

Today the main application of PET preforms with bi-layer technology is in the production of containers for light-sensitive products, such as UHT milk having a long shelf-life, given the light barrier produced by their dark-colored inner layer and white-colored outer layer; these two layers protect against light transmission by absorption and reflection, respectively. Patent document EP 2511064-B1 belonging to the inventors of this application provides an example of one such PET preform.

Other applications of this bi-layer PET technology have been tested for packaging products that cannot be contained in single-layer PET containers due to the physical or chemical characteristics of the product, besides other applications where the objective is to provide the container with a special esthetic appearance in terms of coloring, glossiness or visual effects.

The first case involves products containing certain chemical agents which can attack conventional PET material, limiting or hindering use thereof, and for which chemical resistance of the container is to be improved.

In the second case, i.e., in the use to provide containers requiring a special esthetic appearance, the outer appearance achieved with the bi-layer preform and with the container subsequently obtained by blowing must be perfect, preventing any defect in appearance, such as a lack of transparency, glossiness, etc.

In both cases, the mechanical strength obtained with the bi-layer container must be the same as or at least comparable to the strength of an equivalent single-layer container, because this would otherwise limit its use. In this aspect, adhesion between the two layers of the preform must be suitable.

### Disclosure of the Invention

The invention proposes a solution to problems that are well known in the sector associated with the production of bi-layer preforms such as those mentioned.

PET is a semi-crystalline thermoplastic material. The main problem when overmolding a bi-layer PET preform is the dull, whitish appearance that can be seen in the bottom area of the preform. This milky appearance is due to excessive PET crystallinity with respect to the amorphous state that it should ideally have.

To explain the process by means of which this excessive crystallinity occurs, the fact that PET has an amorphous structure once melted must be considered. To remain amorphous upon solidification, there is a need to rapidly cool the molded PET part to go from 270°C - 290°C, the temperature at which it is injected, until reaching the transition temperature Tg, between 67°C and 81°C. This cooling must occur in the shortest time possible. It must be taken into account that for injecting a PET part, there is a need for a nozzle with a plug valve at the bottom of the cavity of the mold, which is large enough to prevent friction of the molten material during injection and prevents, once closed, an excess of very hot material at the injection point. The diameter of the injection point in most preform molds is usually 4 mm in diameter. When the plug of the nozzle is closing the injection point, cooling of this area is slower than the rest, given that the plug in contact with the PET material has no cooling means, and as a result of this slow cooling, a certain crystallization of the material in this area is created. A certain degree of crystallinity in this area, evaluated at a rate of 35% in the preform bottom wall thickness, is usually accepted in practice.

As is well known in overmolding technology using two materials, an inner thermoplastic layer having an injection point is first injected, and therefore the bottom area, where the injection point is located, can have a level of crystallinity of 35% in wall thickness. Upon overmolding this inner layer with a hot outer layer at a minimum temperature of 270°C, the area of the injection point of the first layer is driven by the second layer, and the crystallinity contained in this area is dispersed along the contact surface between the two layers, being able to reach the area of the preform body. This crystalline area can be detected due to its lack of transparency and whitish appearance in the preform, but it is further amplified at the time of blowing said preform to convert it into a bottle. This visible defect in the bottle is unacceptable, and this is why applications on the market for two-layered transparent bottles have not been achieved.

Besides the defect in the outer appearance, the crystallinity dispersed in the lower area of the preform has other drawbacks which have an impact on the correct bi-orientation by blowing of the bottle, and it furthermore affects the mechanical properties of the bottle blown with these preforms.

PET in amorphous state has mediocre mechanical properties, and only drawing and blowing in the two axial and radial axes increase these mechanical properties. Given that the level of crystallinity of the bottom area is greater in an overmolded bi-layer preform due to the conditions that arise in its previously described injection process, this affects the subsequent drawing and blowing process. The result is a reduction in mechanical resistance which can be verified in a bottle drop test; the bottom area of the liquid-filled bottle is easily breakable even if it is dropped from a height of 1 meter.

A second problem in the production of bi-layer preforms, which is also solved by some of the embodiments of the solution of this invention, is the possible separation of the two layers, or delamination ,in the event that the two layers are made of the same PET material, given that the melting point of crystalline PET is higher than the melting point of amorphous PET during injection of the second layer, it is more difficult for the hot material supplied to melt and adhere to the first layer when it has a higher degree of crystallinity, or it can be said that the adhesion between the two layers is not constant when there are crystalline areas and amorphous areas in the first PET layer.

For the purpose of solving the mentioned problems, the invention proposes that the first layer of material of the bi-layer preform is made up only of amorphous material with or without dye (i.e., being able to optionally integrate a dye in a small proportion) or of a composition of PET material mixed with an amorphous thermoplastic material, whereas said outer layer will mostly comprise polyethylene terephthalate (PET), at least 85%.

In some embodiments, the mentioned outer PET layer can reach up to 100% or can contain from 90% to 99.9% of PET and from 0.1 % to 10% of a dye.

The amorphous material will be selected from SBC (styrene butadiene copolymer), SAN (styrene acrylonitrile), HIPS (high impact polystyrene), MBS (methyl methacrylate butadiene styrene), PETG (polyethylene terephthalate glycol), or others for the purpose of preventing or reducing the level of crystallinity of the mentioned inner layer as much as possible.

If a selected amorphous thermoplastic material is used to replace the PET material for making the first layer of the bi-layer preform, this amorphous material must be compatible with PET for perfect adhesion of the two layers; this would solve the problems relating to poor adhesion due to crystallinity mentioned above.

Recent tests conducted by the inventors have demonstrated that when producing bi-layer preforms with an inner layer comprising up to 100% of an amorphous material from among those mentioned above, with or without dye (i.e., in the case of integrating a dye, comprising a mixture of pigments, the dye will supply part of the mentioned 100% of the material of the first layer) and with an outer layer with at least 85% of polyethylene terephthalate (PET) also with or without dye, said preforms are transparent and have no crystallinity dispersion in the bottom area if one of the materials mentioned above is used for making the first layer or inner layer.

Furthermore, an amorphous thermoplastic material chosen from those mentioned above can also be used as a base material for preparing a dye (both for said inner layer and for the outer layer) comprising a color concentrate (known in the sector as masterbatch) formed by a mixture of pigments encapsulated in a support resin which is an amorphous material, or as a carrier for supplying dyes to the inner layer of a bi-layer PET preform, wherein said composition comprises from 20% to 80% of the total of the pigment and resin mixture, and said pigments are present in a proportion of 80% to 20% of the total of the pigment and resin mixture.

In another embodiment, the mentioned inner and outer layers of the preform can both integrate a color concentrate and have one and the same proportion of said color concentrate.

Another significant advantage of using an amorphous thermoplastic material such as SBC, SAN, HIPS, MBS, PBT or PETG for making the inner layer of a bi-layer preform with an outer PET layer is the ability to confer to said inner layer a predetermined chemical resistance to some chemical agents such as, for example, sodium hydroxide (caustic soda) or sodium hypochlorite (bleach), commonly used in disinfecting and whitening products, and against which PET has no resistance.

The proposed preform thereby achieves the combination of the chemical resistance of these amorphous materials in contact with a corrosive liquid with the mechanical strength, dimensional stability, transparency and glossy appearance of the PET in the outer layer. In this case, the inner layer of the bi-layer preform must be designed from the bottom to the upper edge, thereby preventing contact between the corrosive liquid and the outer PET layer.

Another advantage derived from the use of an amorphous material for the inner layer of a bi-layer preform is a better resistance to high temperatures. Many products are packaged at room temperature, but there hot filling methods, particularly in food products, for the purpose of eliminating microbial activity when the product has a high organic material content; PET containers do not withstand the high hot filling temperature of between 85 - 100°C given that this temperature is higher than the transition temperature TG of PET which is about 80°C. Therefore, a bi-layer preform in which the inner layer is made of an amorphous material allows a higher filling temperature, and it can be acceptable for a hot filling process.

According to yet another embodiment of the invention, said embodiment proposes a preform in which the inner layer comprises a mixture of an amorphous thermoplastic material and polyethylene terephthalate (PET), with or without dye, the proportion of the latter being greater than that of the former and the outer layer consists mostly of PET and, as indicated, of at least 85% of PET, or comprising from 90% to 99.9% of polyethylene terephthalate (PET) and from 0.1 to 10% of a dye

In an example of this embodiment, it has been envisaged that the inner layer comprises from 2% to 15% of said amorphous thermoplastic material and from 85 to 98% of polyethylene terephthalate (PET) and the outer layer comprises:
- 100% of PET; or
- from 90% to 99.9% of polyethylene terephthalate (PET) and from 0.1 to 10% of a dye integrating titanium dioxide (TiO₂) and/or talc.

The mentioned outer dye can be prepared in the form of color concentrate consisting of 20 to 70% of a white dye such as titanium dioxide (TiO₂), and/or talc pigments and 30 to 80% of a base thermoplastic material such as SBC, SAN, HIPS, MBS, PBT or PETG, with respect to the PET material, at a concentration of 2 to 15%; this outer layer provides the characteristic white color appearance of milk bottles, and aids in protecting against light by means of reflecting about 10% of the light waves. Furthermore, other advantages of using a composition of amorphous material in the outer layer is, on one hand, to give the bottle a softer and smoother feel, and on the other, to provide an easier blowing process.

In another embodiment it has been envisaged that both the inner layer and the outer layer of the preform comprise from 2 to 15% of said amorphous thermoplastic material and from 85 to 98% of polyethylene terephthalate (PET).

The inner layer can in turn integrate a dark dye having light absorption capacity in the range of ultraviolet and visible spectrum wavelengths.

In one embodiment, the mentioned dark dye can be obtained by means of a color concentrate comprising a proportion of 20 to 70% of a dark dye incorporated to 30 to 80% of a base material such as said SBC, SAN, HIPS, MBS, PBT, or PETG. This color concentrate or masterbatch can be incorporated in a proportion of between 3 to 15% in the PET material to produce the inner layer of preforms with a light barrier, for the purpose of achieving 0% light transmission in the ultraviolet and visible spectra. This dark inner layer can assure about 90% of the total protection against light through light wave absorption.

These amorphous materials are not hygroscopic so they do not have to be dehumidified before the injection process, unlike the PET material which requires doing same as it is hygroscopic.

In any case, the possibility of using the mentioned amorphous materials for the inner layer of a bi-layer container greatly broadens the field of application of the preforms which has been limited up until now to applications where only PET is suitable; one example that can be provided is bleach, which is a widely used product. Bleach cannot be packaged in PET so it is not possible to make bleach bottles from preforms, i.e., by means of the most productive and cleanest reheating-drawing-blowing technology that requires less space; in practice, bleach bottles are being made from polyethylene using extrusion-blowing technology, which, besides consuming more energy in the process, creates a significant percentage of waste that must be reprocessed, without taking into account that the market price of polyethylene is higher than the market price of PET.

### Brief Description of the Drawings

Figure 1 illustrates a two-layered preform according to the present invention, wherein the inner layer extends from a closed base to an upper opening of the preform.
Figure 2 shows a two-layered preform according to the invention, wherein the inner layer extends from a closed base to where the portion intended for forming the neck of the preform starts.

### Detailed Description of Exemplary Embodiments

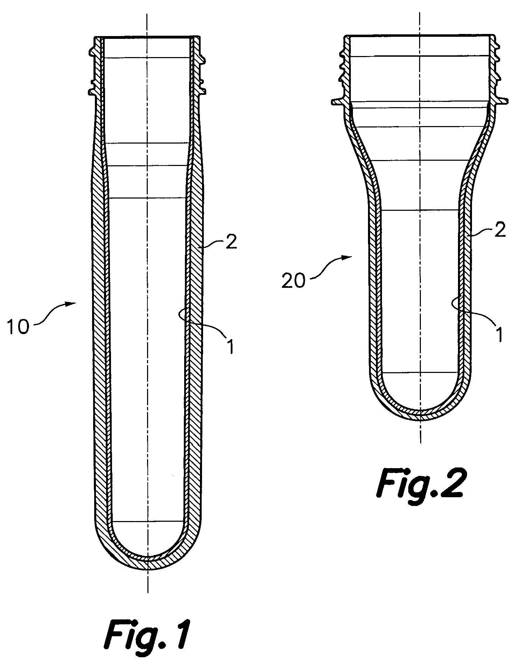

Figure 1 proposes a two-layered preform 10 obtained by injection molding for producing containers by drawing-blowing, comprising an inner layer made of a thermoplastic material and an outer layer made of a thermoplastic material overmolded on said inner layer, said preform having an inner layer 1 covering the entire cavity, extending from its closed base to an upper opening of the preform, and said inner layer 1 being made primarily of an amorphous thermoplastic material, with or without dye, having a predetermined chemical resistance to several chemical agents, such as, for example, sodium hydroxide (caustic soda) or sodium hypochlorite (bleach), commonly used in disinfecting and whitening products. The outer layer 2 is substantially made of PET (i.e., in a proportion of 100%) or of PET integrating a proportion (for example, from 0.1 to 10%) of a dye of any type, although it is advantageously comprised in the form of a color concentrate.

As indicated, said amorphous thermoplastic material is selected from a group comprising styrene butadiene copolymer (SBC), styrene acrylonitrile (SAN), high impact polystyrene (HIPS), methyl methacrylate butadiene styrene (MBS), and polyethylene terephthalate glycol (PETG), although other amorphous materials with specific resistance properties against chemical agents can be used.

The preform 20 of Figure 2 differs from the preceding preform illustrated in Figure 1 in that in this case the inner layer 1 does not reach the mouth of the preform 20, i.e., it ends in the area of the preform 20 intended for forming the neck of the container. In this example, it has been envisaged that the inner layer 1 comprises a mixture of an amorphous thermoplastic material and polyethylene terephthalate (PET), with or without dye, the proportion of the second thermoplastic material being greater than that of the former and the outer layer 2 being primarily formed from polyethylene terephthalate (PET).

Therefore, according to a first embodiment that can be implemented by means of the preform of Figure 1, it has been envisaged that said inner layer 1 of the preform 10 comprises up to 100% of an amorphous thermoplastic material, with or without dye, and the outer layer 2 comprises at least 85% of polyethylene terephthalate (PET).

In a second preferred embodiment, the inner layer 1 comprises up to 100% of an amorphous thermoplastic material, with or without dye, and the outer layer 2 comprises 100% of polyethylene terephthalate (PET).

In the case of including a dye in any of the two embodiments described above, it has been envisaged that the mentioned inner layer 1 comprises from 0.1 to 10% of a dye.

In another embodiment, the inner layer 1 comprises up to 100% of an amorphous thermoplastic material, with or without dye, and the outer layer 2 comprises from 90% to 99.9% of polyethylene terephthalate (PET) and from 0.1 to 10% of a dye.

In yet another embodiment, said inner layer 1 of the preform 10 can comprise from 0.1 to 10% of a dye and the rest of the amorphous thermoplastic material, and the outer layer 2 comprises from 90% to 99.9% of polyethylene terephthalate (PET) and from 0.1 to 10% of a dye, i.e., both layers 1 and 2 integrate a dye

In relation to a preform that can be advantageously implemented according to the embodiment of Figure 2, i.e., a preform 20 intended for containers for edible liquids such as milk, a preform 20 is proposed in which the inner layer 1 comprises from 2 to 15% of said amorphous thermoplastic material and from 85 to 98% of polyethylene terephthalate (PET), and the outer layer 2 is primarily formed by PET, which may or may not include one or more dyes.

Therefore, in a first embodiment the inner layer 1 of the preform 20 mentioned above comprises from 2 to 15% of said amorphous thermoplastic material and from 85 to 98% of polyethylene terephthalate (PET), and the outer layer 2 of said preform 20 comprises from 2 to 15% of said amorphous thermoplastic material and from 85 to 98% of polyethylene terephthalate (PET), i.e., both layers 1 and 2 have substantially one and the same composition. This case is particularly advantageous for achieving an effective unification of the two layers of the preform during the process for obtaining same by overmolding a thermoplastic layer on a thermoplastic first layer, avoiding the mentioned delamination problems.

In a second embodiment, it has been envisaged that the inner layer 1 of the preform 20 comprises from 2 to 15% of said amorphous thermoplastic material and from 85 to 98% of polyethylene terephthalate (PET) and the outer layer 2 of said preform 20 will be made up entirely of the same material, i.e., 100% of polyethylene terephthalate (PET).

In a third embodiment, the inner layer 1 of the preform 20 comprises from 2 to 15% of said amorphous thermoplastic material and from 85 to 98% of polyethylene terephthalate (PET), and the outer layer 2 comprises from 90% to 99.9% of polyethylene terephthalate (PET) and from 0.1 to 10% of a dye integrating titanium dioxide (TiO₂) and/or talc.

According to another embodiment, it has been envisaged that the amorphous thermoplastic material and PET mixture of said inner layer 1 of the preform 20 integrates a dark dye, in particular a dye having a recognized light absorption capacity, particularly covering the entire range of ultraviolet and visible spectrum wavelengths.

In all the embodiments of the proposed preform which can be implemented according to Figures 1 and 2, i.e., preforms 10 or 20, when referring to dye or dyes, it must be understood that the dye can be prepared in the form of a color concentrate (known in the sector as masterbatch) formed by a mixture of color pigments encapsulated in a support resin made of an amorphous material such as the one described above, i.e., selected from a group comprising styrene butadiene copolymer (SBC), styrene acrylonitrile (SAN), high impact polystyrene (HIPS), methyl methacrylate butadiene styrene (MBS), and polyethylene terephthalate glycol (PETG). In addition, the mentioned support resin or base has been envisaged to comprise from 20% to 80% of the total of the pigment and resin mixture of the color concentrate, as long as said pigments are present in a corresponding manner in a proportion of 80% to 20% of the total of the pigment and resin mixture of the color concentrate.

The different alternatives of the invention are defined by the following claims.

## Claims

1. A two-layered preform obtained by injection molding for producing containers by drawing-blowing, the preform (10, 20) comprising an inner layer (1) made of a thermoplastic material and an outer layer (2) made of a thermoplastic material overmolded on said inner layer (1), **characterized in that** the inner layer (1) comprises up to 100% of an amorphous material, with or without dye, and said outer layer (2) comprises at least 85% of polyethylene terephthalate, PET.

2. The two-layered preform according to claim 1, wherein said amorphous thermoplastic material is selected from a group comprising styrene butadiene copolymer (SBC), styrene acrylonitrile (SAN), high impact polystyrene (HIPS), methyl methacrylate butadiene styrene (MBS), and polyethylene terephthalate glycol (PETG).

3. The preform according to claim 1 or 2, wherein the outer layer (2) comprises 100% of polyethylene terephthalate (PET).

4. The preform according to any one of claims 1 to 3, wherein said inner layer (1) comprises from 0.1 to 10% of a dye.

5. The preform according to claim 1 or 2, wherein said outer layer (2) comprises from 90% to 99.9% of polyethylene terephthalate (PET), and from 0.1 to 10% of a dye.

6. The preform according to claim 1, wherein the inner layer (1) comprises from 0.1 to 10% of a dye and the outer layer (2) comprises from 90% to 99.9% of polyethylene terephthalate (PET), and from 0.1 to 10% of a dye.

7. The preform according to any one of claims 1 to 6, wherein the inner layer (1) extends from a closed base of the preform (10) to an upper opening of the preform (10).

8. The preform according to claim 1 or 2, wherein the inner layer (1) comprises a mixture of an amorphous thermoplastic material and polyethylene terephthalate (PET), with or without dye, the proportion of the latter being greater than that of the former.

9. The preform according to claim 8, wherein the inner layer (1) comprises from 1 to 15% of said amorphous thermoplastic material and from 85 to 99% of polyethylene terephthalate, (PET).

10. The preform according to claim 9, wherein the outer layer (2) comprises from 1 to 15% of said amorphous thermoplastic material and from 85 to 99% of polyethylene terephthalate (PET).

11. The preform according to claim 9, wherein the outer layer (2) comprises 100% of polyethylene terephthalate (PET).

12. The preform according to claim 9, wherein the outer layer (2) comprises from 90% to 99.9% of polyethylene terephthalate (PET), and from 0.1 to 10% of a dye integrating titanium dioxide (TiO₂) and/or talc.

13. The preform according to claim 9, wherein the mixture of amorphous thermoplastic materials and PET of said inner layer (1) comprises a dark dye.

14. The preform according to claim 13, wherein said dark dye is a dye having light absorption capacity in the range of ultraviolet and visible spectrum wavelengths.

15. The preform according to any one of claims 4 to 6 or 12 to 14, wherein said dye comprises a color concentrate formed by a mixture of color pigments encapsulated in a support resin made of an amorphous material selected from a group comprising styrene butadiene copolymer (SBC), styrene acrylonitrile (SAN), high impact polystyrene (HIPS), methyl methacrylate butadiene styrene (MBS), and polyethylene terephthalate glycol (PETG), wherein said support resin comprises from 20% to 80% of the total of the pigment and resin mixture of the color concentrate and said pigments are present in a proportion of 80% to 20% of the total of the pigment and resin mixture of the color concentrate.
